# DEMANDE DE BREVET EUROPEEN

(11) **EP 0 552 998 A1**
(43) Date de publication de la demande: **28.07.1993**
(21) Numéro de dépôt: 93400038.1
(22) Date de dépôt: 08.01.1993
(51) Int. Cl.: B01D 49/00, C01G 49/10, C07C 317/22, C07C 323/20, C07C 49/813, C07C 41/22, C07C 315/04, C07C 319/20

(54) **Dispositif pour réduire l'entraînement de vésicules dans un courant d'hydrogène**

(30) Priorité: 21.01.1992 FR 9200604
(71) Demandeur: ELF ATOCHEM S.A., F-92800 Puteaux (FR)
(72) Inventeur: Clair, René, F-13500 Martigues (FR)

(57) **Abrégé**

L'invention concerne un dispositif utile pour réduire l'entraînement de vésicules provenant d'une cuve d'attaque de fer par l'acide chlorhydrique dans la préparation du chlorure ferreux.

Le dispositif de l'invention comprend
a) un moyen de dévésiculage traversé par le courant d'hydrogène et disposé pour obturer en tout ou partie l'ouverture de la cuve
b) un moyen pour envoyer de l'air dans la cuve et disposé entre l'ouverture de la cuve et le moyen de dévésiculage
c) le moyen b devant envoyer une quantité d'air telle que le mélange air-hydrogène soit toujours dans la limite basse de la zone d'inflammabilité.

## Description

La présente invention concerne un dispositif pour réduire l'entraînement de vésicules dans un courant d'hydrogène.

L'invention concerne particulièrement les réacteurs ouverts en partie haute ou les cuves d'attaque dans lesquels ont fait réagir un acide sur un métal ou un oxyde pour faire un sel et il se produit un dégagement d'hydrogène. Ces cuves sont disposées à l'extérieur pour que l'hydrogène puisse se dégager facilement sans former de mélanges inflammables ou explosifs. Mais la réaction étant exothermique la solution d'acide contenant le sel est chaude la tension de vapeur est élevée, le dégagement d'hydrogène au sein de cette solution provoque un bouillonnement ce qui conduit à un entraînement de vésicules. Par exemple quand on prépare le chlorure ferreux par attaque de copeaux de fer dans une solution d'acide chlorhydrique le courant d'hydrogène entraîne des vésicules d'une solution aqueuse d'acide chlorhydrique et de chlorure ferreux. Ceci crée une pollution et une forte corrosion due à la présence d'acide chlorhydrique. Par contre puisqu'il n'y a pas de confinement les effets de l'explosion éventuelle du mélange air-hydrogène sont négligeables et se réduisent à des inflammations temporaires.

Le but de l'invention est de réduire l'entraînement de vésicules dans un courant d'hydrogène tout en évitant de créer des mélanges explosifs. Un autre but de l'invention est de pouvoir accéder facilement à la surface de la cuve ou du réacteur pour charger le métal ou l'oxyde.

La présente invention est donc un dispositif pour réduire l'entraînement de vésicules dans un courant d'hydrogène provenant d'une cuve ouverte comprenant
a) un moyen de dévésiculage traversé par le courant d'hydrogène et disposé pour obturer en tout ou partie l'ouverture de la cuve
b) un moyen pour envoyer de l'air dans la cuve et disposé entre l'ouverture de la cuve et le moyen de dévésiculage
c) le moyen b devant envoyer une quantité d'air telle que le mélange air-hydrogène soit toujours dans la limite basse de la zone d'inflammabilité.

Le moyen de dévésiculage a peut être un (i) système de chicanes, (ii) un matelas de fibres communément appelé "matelas dévésiculeur" et qu'on utilise souvent dans la partie haute des colonnes de lavage au dessus du dernier plateau ou du dernier lit de garnissage pour ne pas entraîner de vésicules dans les gaz, ou (iii) tout moyen équivalent.

On peut disposer ce moyen de dévésiculage de toute manière, la plus simple étant de le poser au-dessus de l'ouverture de la cuve comme un couvercle. On peut obturer tout ou partie de l'ouverture de la cuve, avantageusement on obture toute l'ouverture.

Le moyen b peut être un conduit en forme de couronne de distribution disposé sur le bord supérieur de la cuve. Il est alimenté par un tuyau venant d'un ventilateur, et la couronne est percée de trous vers l'intérieur de la cuve pour injecter l'air dans la phase gazeuse de la partie supérieure de la cuve. Sur cette couronne on peut poser le moyen dévésiculeur. Avantageusement le moyen dévésiculeur est simplement posé sur la couronne elle-même fixée sur le rebord de la cuve. Le moyen a peut être en plusieurs parties, ainsi on enlève facilement l'une des parties avec un moyen de levage pour pouvoir ensuite charger la cuve par exemple en métal ou oxydes. On peut utiliser le même moyen de levage pour le moyen dévésiculeur et pour charger le métal ou les oxydes.

L'avantage du moyen de dévésiculage simplement posé est de pouvoir se soulever facilement en cas d'inflammation ou d'explosion du mélange air-hydrogène évitant ainsi les projections de matériaux quand des réservoirs sous pression explosent.

La quantité d'air à envoyer dans la cuve pour que le mélange air hydrogène soit toujours dans la limite basse de la zone d'inflammation se détermine selon les diagrammes habituels d'inflammabilité et d'explosivité. Par exemple si la phase gazeuse de la cuve contient de l'air, de l'hydrogène, de la vapeur d'eau, la température est 42°C et la pression totale 100 hPa alors la quantité d'hydrogène doit être inférieure à 4 % en volume (tant que la vapeur d'eau est inférieure à 60 %). On peut se reporter utilement à l'encyclopédie ULLMANS 5ème édition Volume A13 pages 308 et 309.

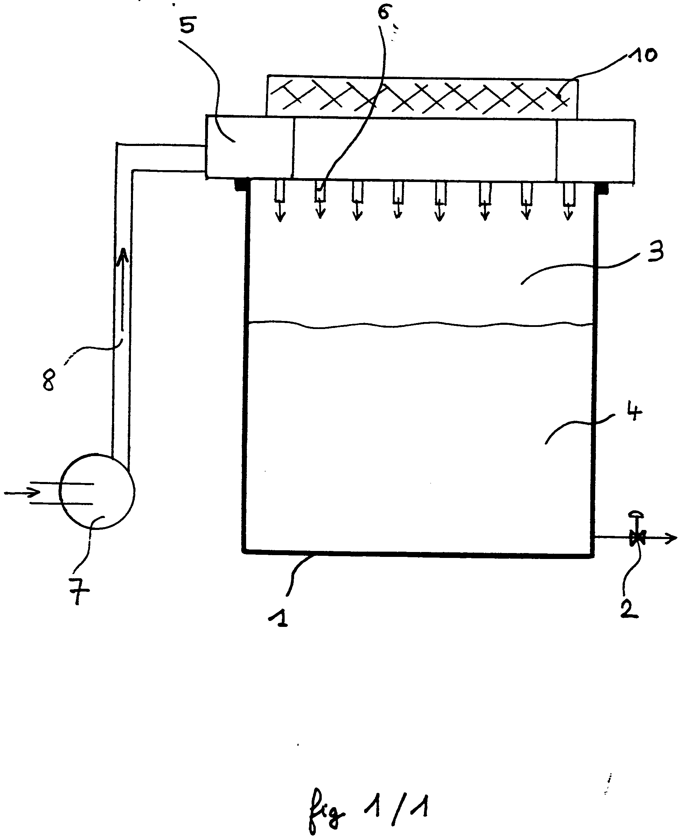

La figure 1 représente un mode de réalisation possible du dispositif de l'invention. 1 représente la cuve, 2 une vanne de vidange de la cuve, 3 la phase gazeuse de la cuve dans laquelle arrive l'hydrogène généré dans la phase liquide 4, 5 représente la couronne de distribution d'air de forme torique à section rectangulaire, 6 sont les buses de distribution d'air. 7 et 8 représentent respectivement le ventilateur et la gaine d'arrivée d'air à la couronne 5 ; 10 est le moyen dévésiculeur.

Avantageusement on peut nettoyer en marche le moyen de dévésiculage a par un jet d'eau ou des rampes de pulvérisateurs. On ne sortirait pas du cadre de l'invention si le jet d'eau était un jet alimenté avec de l'acide servant à alimenter la cuve, de même pour les pulvérisateurs.

La demanderesse a découvert qu'on peut réduire fortement l'encrassement du dévésiculeur en chargeant en humidité l'air qu'on envoie pour diluer l'hydrogène.

On peut charger l'air d'humidité en y injectant de l'eau pulvérisée, avantageusement on sature l'air en humidité. Pour être sûr de saturer l'air en humidité on envoie une quantité d'eau en excès. Il peut être nécessaire de recueillir l'excès dans les parties basses des moyens d'injection d'air b pour éviter de diluer la solution de la cuve.

Le dispositif de l'invention est particulièrement utile pour la cuve d'attaque du fer par une solution d'acide chlorhydrique dans un procédé de synthèse de chlorure ferreux. La présente invention est aussi l'application de ce dispositif pour réduire l'entraînement de vésicules de FeCl₂-H₂O-HCl dans cette préparation du FeCl₂.

## Revendications

1. Dispositif pour réduire l'entraînement de vésicules dans un courant d'hydrogène provenant d'une cuve ouverte comprenant
a) un moyen de dévésiculage traversé par le courant d'hydrogène et disposé pour obturer en tout ou partie l'ouverture de la cuve
b) un moyen pour envoyer de l'air dans la cuve et disposé entre l'ouverture de la cuve et le moyen de dévésiculage
c) le moyen b devant envoyer une quantité d'air telle que le mélange air-hydrogène soit toujours dans la limite basse de la zone d'inflammabilité.

2. Dispositif selon la revendication 1 caractérisé en ce qu'il existe une injection d'eau pulvérisée dans le moyen d'injection d'air b.

3. Procédé pour réduire l'entraînement de vésicules dans un courant d'hydrogène provenant d'une cuve d'attaque du fer par une solution d'acide chlorhydrique caractérisé en ce qu'on utilise le dispositif de la revendication 1 ou 2.
